# EUROPEAN PATENT APPLICATION

(11) **EP 3 228 933 A1**
(43) Date of publication of application: **11.10.2017**
(21) Application number: 17382172.9
(22) Date of filing: 04.04.2017
(51) Int. Cl.: F21V 21/28, F21V 21/30, F21S 8/06, F21V 21/35

(54) **LIGHTING DEVICE**

(30) Priority: 04.04.2016 ES 201630408
(71) Applicant: Grupo Luxiona, S.L., 08420 Canovelles (Barcelona) (ES)
(72) Inventor: ALVAREZ DELEGIDO, Carlos, 08420 CANOVELLES (Barcelona) (ES)
(74) Representative: Herrero & Asociados, S.L.

(57) **Abstract**

The present invention relates to a lighting device, said lighting device comprising a support (1) and a projector (2), said projector (2) being attached to the support (1) by means of an arm (4), said arm (4) being rotational with respect to said support (1) about a first axis of rotation (A) and said projector (2) being rotational with respect to said arm (4) about a second axis of rotation (B), wherein said arm (4) is attached to the projector (2) by means of a mounting plate (6), which is fixed to a chassis (7) of said projector (2).

The invention allows for a lower cost of the lighting device since the rotation mechanism between the arm and the projector is very simple.

## Description

The present invention relates to a lighting device, comprising a projector that can be oriented about two axes of rotation.

### Background of the Invention

Lighting devices are known to comprise a projector attached to a support which is fixed, for example, to the ceiling of a room or shop. This attachment between the support and the projector is usually done by means of an arm.

When installing a lighting device of this type, one objective is for it to light up a desired area, for which reason the lighting device must be installed in a certain position.

Lighting devices in which the projector can be oriented about two axes of rotation for lighting up the desired area are also known. However, the rotation mechanisms used in known lighting devices of this type have a high cost that ultimately affects the total cost of the lighting device.

Therefore, the objective of the present invention is to provide a lighting device in which the rotation mechanism has a lower cost, and which is as simple as possible.

### Description of the Invention

The mentioned drawbacks are solved with the lighting device of the invention, said device having other advantages that will be described below.

The lighting device according to the present invention comprises a support and a projector, said projector being attached to the support by means of an arm, said arm being rotational with respect to said support about a first axis of rotation and said projector being rotational with respect to said arm about a second axis of rotation.

According to the present invention, said arm is attached to the projector by means of a mounting plate, which is fixed to a chassis of said projector. Said mounting plate can comprise two rotation limiting stops housed inside a space defined at one end of the arm attached to the projector.

As a result of this feature, the cost of the lighting device is lower since the rotation mechanism between the arm and the projector is very simple.

Advantageously, said space has a substantially rectangular shape with an extension in one of its vertexes.

According to a preferred embodiment, said arm is formed by two sections, forming an obtuse angle, and comprises a flat substantially perpendicular with respect to the rest of the arm, which flat is attached to said support.

To make rotation of the projector easier, a first washer is placed between the mounting plate and the arm and a second washer is placed between the chassis and the arm.

According to a preferred embodiment, said arm is rotational from 340° to 360° with respect to said support about the first axis of rotation, and said projector is rotational from 80° to 100° with respect to said arm about the second axis of rotation.

### Brief Description of the Drawings

To better understand the preceding description a set of drawings is attached in which a practical embodiment is schematically shown merely by way of non-limiting example.
Figure 1 is a perspective view of the lighting device according to the present invention; and
Figure 2 is an enlarged perspective view of the lighting device according to the present invention, with the mounting plate removed.

### Description of a Preferred Embodiment

The lighting device according to the present invention comprises a support 1 which is fixed, for example, to the ceiling after having previously installed a track, and a projector 2 including a lighting element 3.

The projector 2 is attached to the support 1 by means of an arm 4, which is rotational about a first axis of rotation A. In the assembly position depicted in the drawings, said first axis of rotation A is substantially vertical, such that the arm 4 can rotate almost a complete turn, for example, between 340° and 360°, such as 355°.

For the attachment thereof to the support 1, the arm 4 comprises at one of its ends a flat 5 that is substantially perpendicular with respect to the rest of the arm 4.

Said arm 4 defines two sections forming an obtuse angle, as can be seen in the drawings. In the assembly position, one section is substantially vertical and the other section is tilted.

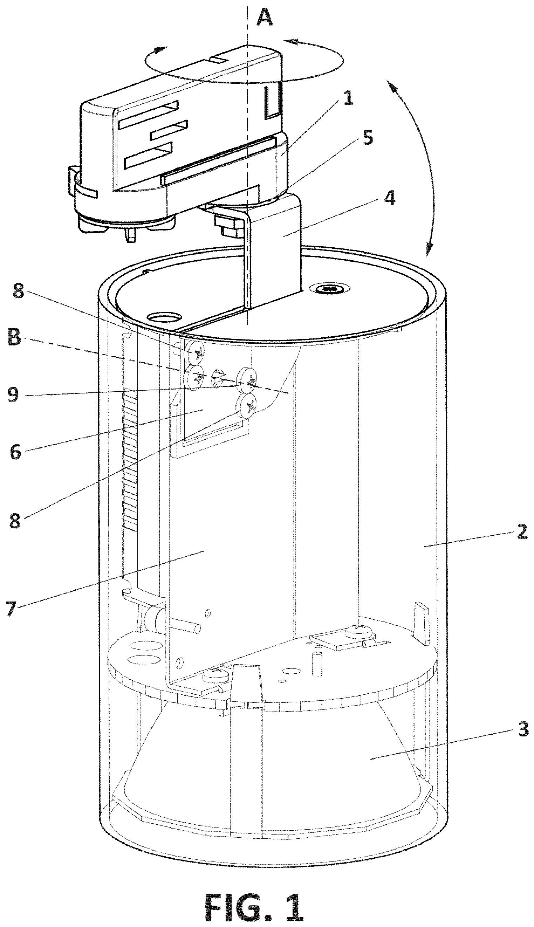

Mounted at the other end of the arm 4 is the projector 2, which is rotational with respect to a second axis of rotation B, indicated in Figure 1, such that the projector 2 can rotate between 80° and 100°, for example 90°, about this second axis of rotation B.

Coinciding with the second axis of rotation B, said arm 4 comprises a hole in which a lug 13 is housed, helping to make the assembly of the projector 2 on the arm 4 easier.

The attachment between the projector 2 and the arm 4 is done by means of a mounting plate 6, which is fixed to a chassis 7 of the projector, for example, by means of screws 8. Furthermore, said mounting plate 6 also comprises stops 9, housed inside a space 10 of said arm 4, limiting rotation of the projector 2 about said second axis of rotation B.

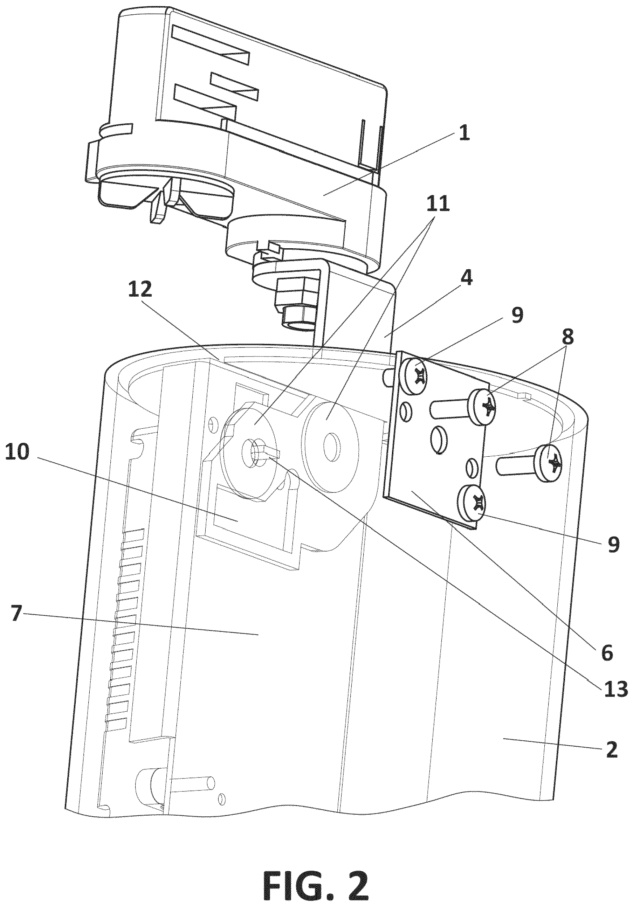

Said stops 9 can be, for example, screws, although they could be any suitable element. The space 10 defined at the end of the arm 4 attached to the projector is substantially rectangular, with an extension at one of the ends thereof, as best seen in Figure 2.

To make rotation of the projector 2 easier, washers 11, for example polyamide washers, are arranged between the chassis 7 and the arm 4, and the arm 4 and the mounting plate 6, respectively. Furthermore, to allow rotation of the projector 2, the upper part thereof comprises a groove 12 having suitable dimensions through which the arm 4 is introduced into the projector 2.

As a result of the two axes of rotation A, B, the operator installing the lighting device of the present invention can freely orient the projector, since it can be rotated virtually in its entirety and tilted enough to light up areas that are closer to or farther away from the point of installation of the lighting device. Furthermore, the user can also easily change the orientation of the projector when desired.

Despite having referred to a specific embodiment of the invention, it is evident for the person skilled in the art that the lighting device described is susceptible to a number of variations and modifications, and that all the details mentioned herein can be replaced with other technically equivalent ones without departing from the scope of protection defined by the attached claims.

## Claims

1. Lighting device comprising a support (1) and a projector (2), said projector (2) being attached to the support (1) by means of an arm (4), said arm (4) being rotational with respect to said support (1) about a first axis of rotation (A) and said projector (2) being rotational with respect to said arm (4) about a second axis of rotation (B), **characterized in that** said arm (4) is attached to the projector (2) by means of a mounting plate (6), which is fixed to a chassis (7) of said projector (2).

2. Lighting device according to claim 1, wherein said mounting plate (6) comprises two rotation limiting stops (9) housed inside a space (10) defined at one end of the arm (4) attached to the projector (2).

3. Lighting device according to claim 2, wherein said space (10) has a substantially rectangular shape with an extension in one of its vertexes.

4. Lighting device according to claim 1, wherein said arm (4) is formed by two sections, forming an obtuse angle.

5. Lighting device according to claim 1, wherein said arm (4) comprises a flat (5) that is substantially perpendicular with respect to the rest of the arm (4), which flat (5) is attached to said support.

6. Lighting device according to claim 1, comprising a washer (11) placed between the mounting plate (6) and the arm (4).

7. Lighting device according to claim 1, comprising a washer (11) placed between the chassis (7) and the arm (4).

8. Lighting device according to claim 1, wherein said arm (4) is rotational from 340° to 360° with respect to said support (1) about the first axis of rotation (A).

9. Lighting device according to claim 1, wherein said projector (2) is rotational from 80° to 100° with respect to said arm (4) about the second axis of rotation (B).
